# EUROPÄISCHE PATENTSCHRIFT

(11) **EP 1 710 179 B1**
(45) Veröffentlichungstag und Bekanntmachung des Hinweises auf die Patenterteilung: **28.05.2008**
(21) Anmeldenummer: 05007511.8
(22) Anmeldetag: 06.04.2005
(51) Int. Cl.: B65G 57/30

(54) **Kistenstapellager**
Store for stacks of crates
Magasin pour piles de caisses

(43) Veröffentlichungstag der Anmeldung: 11.10.2006
(73) Patentinhaber: Basic, Josef, 82549 Königsdorf (DE); Reich, Konrad, 83135 Schechen (DE)
(72) Erfinder: Basic, Josef, 82549 Königsdorf (DE); Reich, Konrad, 83135 Schechen (DE)
(74) Vertreter: Beckord, Klaus

(56) Entgegenhaltungen:
- DE-A1- 3 047 914
- DE-A1- 19 849 391
- PATENT ABSTRACTS OF JAPAN Bd. 2003, Nr. 12, 5. Dezember 2003 (2003-12-05) -& JP 2004 035145 A (KANEI KOGYO KK), 5. Februar 2004 (2004-02-05)

## Beschreibung

Die Erfindung betrifft ein Kistenstapellager, in welchem Kisten übereinander gestapelt gelagert werden, mit an einem Gestell beweglich gelagerten Halteklinken, die zum Halten der jeweils untersten Kiste eines Kistenstapels in einem Abstand über dem Boden an zwei gegenüberliegenden Seiten an der Kiste angreifen.

Ein derartiges Kistenstapellager ist beispielsweise aus der DE 198 49 391 C2 bekannt. In diesem Lager werden die Kisten in mehreren nebeneinander und/oder hintereinander angeordneten Stapeln in einem Gestell jeweils an ihrer untersten Kiste mittels Fallklinken gehalten. Mit Hilfe einer Transportvorrichtung, die unterhalb der eingelagerten Kistenstapel verfahrbar ist, können einzulagernde Kisten jeweils von unten unter einen gewünschten Stapel verbracht und/oder auszulagernde Kisten unter dem jeweiligen Stapel abgeholt werden. Zum Einlagern einer Kiste wird diese Kiste von der Transportvorrichtung mit einer Hubvorrichtung unter dem Kistenstapel nach oben gefahren und unter Entriegeln der Fallklinken der gesamte Kistenstapel um zumindest eine Kistenhöhe weiter nach oben gehoben. Sobald die Fallklinken beispielsweise aufgrund der Schwerkraft und/oder mit Hilfe von Federkraft wieder in die Verriegelungsstellung zurückgelangen, halten diese die neu eingelagerte Kiste fest, welche nun die unterste Kiste des Kistenstapels bildet. Die Hubvorrichtung kann dann wieder zum Einlagern neuer Kisten nach unten verfahren werden. Zum Auslagern einer Kiste fährt die Hubvorrichtung leer bis unter den Kistenstapel, aus dem die unterste Kiste entnommen werden soll. Durch ein gesteuertes Entriegeln der Fallklinken wird die unterste Kiste freigegeben und die Hubvorrichtung senkt wieder ab, wobei dafür gesorgt wird, dass die Fallklinken bei der zweituntersten Kiste wieder in die Verriegelungsstellung gebracht werden. Es kann dann die unterste Kiste mit der Hubvorrichtung ganz nach unten und über die Transportvorrichtung aus dem Lager entnommen werden. Üblicherweise werden in derartigen Lagern aus Gründen der Effizienz meist nicht einzelne Kisten entnommen, sondern es wird immer gleichzeitig eine ganze Reihe von Kisten aus einer Kistenstapel-Reihe ausgelagert bzw. eine komplette Reihe von Kisten eingelagert. Das Lager gemäß der DE 198 49 391 C2 weist hierzu einen Transportwagen mit einem Transportband auf, welches sich längs unter einer Kistenstapel-Reihe erstreckt. Mit Hilfe dieses Transportbands kann auf dem Transportwagen eine Kistenreihe zur Einlagerung zusammengestellt werden. Der Wagen fährt dann in die gewünschte Kistenstapel-Reihe und das Transportband wird mit Hilfe der Hubvorrichtung komplett angehoben, um die Kistenreihe einzulagern. Das Auslagern geschieht auf umgekehrtem Wege.

Bei den in der vorgenannten Konstruktion verwendeten Fallklinken handelt es sich konkret um Bleche, welche sich jeweils über einen großen Teil längs der Kistenseite erstrecken und welche um eine parallel zur Längserstreckung der Kistenstapel-Reihe verlaufende Schwenkachse schwenkbar an dem Gestell gelagert sind, so dass sie jeweils unter Schwerkrafteinfluss und/oder durch Federkraft gegen die Seitenwand der jeweiligen untersten eingelagerten Kiste in die Verriegelungsstellung fallen. In dieser Verriegelungsstellung ragen die Klinkenbleche jeweils schräg nach oben in den lichten Raum zwischen zwei benachbarten, die Kistenstapel-Reihe jeweils seitlich begrenzenden Längsträgern des Gestells hinein und halten mit ihrer oberen Kante so eine Kiste an einer horizontal an der Kiste befindlichen Haltekante - in der Regel eine am Boden oder an der Oberkante der Kiste umlaufende Auskragungen bzw. einem Kragen - fest. Durch geeignete Schaltelemente an der Hubvorrichtung ist es möglich, diese relativ breiten Halteklinken so in eine vertikale Position hochzudrücken, dass der gesamte lichte Raum zwischen zwei benachbarten Trägern freigegeben ist.

Viele Transportkisten weisen jedoch ungünstigerweise mehrere Stabilisierungsstege auf, welche sich vertikal zwischen den am Boden und an der Oberkante der Kiste umlaufenden Kragen erstrecken. Dementsprechend müssen die Klinken derart ausgebildet sein, dass sie zwischen diesen Stegen die Auskragungen einer Kiste untergreifen können, um diese sicher zu halten. Sofern nur ein bestimmter Kistentyp verwendet wird und bei der Einlagerung die Präzision bezüglich der Positionierung der Kisten innerhalb einer Reihe ausreichend genau ist, ist dies kein Problem. Dann können die Klinken jeweils so ausgebildet - z. B. die Klinkenbleche an ihrer oberen Kante passend ausgeschnitten und/oder ausgeformt - und positioniert werden, dass sie immer zwischen den Stabilisierungsstegen an der Seitenwand der Kiste zum Anliegen kommen und die Kiste sicher greifen können. Ein Problem kann jedoch dann auftreten, wenn in einem Kistenlager innerhalb der gleichen Reihe nicht nur Kisten eines Typs, sondern Kisten verschiedener Typen eingelagert werden sollen. Diese Kisten verschiedener Typen weisen die vertikalen Stabilisierungsstege in der Regel an unterschiedlichen Positionen auf. Zudem gibt es auch Kisten, welche nicht derart symmetrisch aufgebaut sind, dass die Stabilisierungsstege an sich gegenüberliegenden Seiten der Kiste an den gleichen Positionen liegen. Bei solchen Kisten hängt die Lage der Stabilisierungsstege relativ zu den Halteklinken folglich auch von der Orientierung der Kiste ab. Erschwerend kommt hinzu, dass die verschiedenen Kisten innerhalb eines relativ breiten Toleranzbereichs voneinander abweichende Außenmaße aufweisen können. Dies führt dazu, dass bei einer Einlagerung von Kisten - wenn, wie eingangs genannt, die Kisten z. B. über ein Laufband dicht aneinander anschließend in einer Reihe zusammengestellt werden - die Position der Kiste relativ zur Halteklinke ebenfalls nur in einem relativ breiten Toleranzbereich genau ist. Somit ist eine Festlegung der Positionen der einzelnen vertikalen Stabilisierungsstege an den Kisten relativ zu den Fallklinken sehr schwierig. Für derartige Kistenlager ist es folglich außerordentlich kompliziert, eine geeignete Form für die Fallklinken festzulegen, beispielsweise die Fallklinke an den Positionen auszuschneiden, an denen Stabilisierungsstege der Kiste auftreten können, so dass die Fallklinken immer sicher die Kiste greifen und nicht an einem Stabilisierungssteg anliegen und folglich nicht unter die Auskragung der Kistenwand greifen können. Die gleiche Problematik besteht auch bei einer Verwendung von einzelnen schmalen Fallklinken, wenn beispielsweise zwei Fallklinken auf jeder Seite der Kiste verwendet werden, welche die Kiste jeweils in Reihenlängsrichtung in einem vorderen Bereich und in einem hinteren Bereich halten. Auch bei derartigen Konstruktionen ist nicht vorherzusagen, ob nicht zufällig ein Stabilisierungssteg genau auf die Position einer solchen Klinke trifft und daher diese Klinke ihre Funktion nicht mehr erfüllen kann und die Kiste daher insgesamt nicht mehr sicher gehalten werden kann.

Es ist daher eine Aufgabe der vorliegenden Erfindung, ein Kistenstapellager der eingangs genannten Art derart weiterzuentwickeln, dass auch verschiedenste Kistentypen mit relativ großen Abmessungstoleranzen immer sicher gehalten werden.

Diese Aufgabe wird zum einen durch ein Kistenstapellager gemäß Patentanspruch 1 gelöst.

Dabei sind erfindungsgemäß jeder Kistenseite mindestens vier Halteklinken zugeordnet, welche einzeln quer zu einer Kistenwand an der betreffenden Kistenseite beweglich, beispielsweise verschiebbar und/oder verschwenkbar, gelagert sind und welche zur Entnahme einer durch die Halteklinken gehaltenen Kiste aus dem Kistenstapellager synchronisiert ansteuerbar sind.

Dadurch, dass die Halteklinken jeweils einzeln beweglich gelagert sind, ist es möglich, dass einige der Halteklinken unmittelbar an der Kistenwand anliegen, wogegen andere Halteklinken, die sich an einer Position befinden, an der bei der einzulagernden Kiste zufällig ein Stabilisierungssteg angeordnet ist, gegen diesen Stabilisierungssteg zur Anlage kommen und von diesem unabhängig von den anderen Klinken weggedrückt werden. Durch die synchronisierte Ansteuerung aller Halteklinken kann dann dafür gesorgt werden, dass unabhängig von der Lage der jeweiligen Halteklinken an der Kistenwand bzw. an einem Stabilisierungssteg der Kistenwand alle Halteklinken gemeinsam entriegelt werden, um Kisten aus- bzw. einzulagern. Aus den vorgenannten Gründen ist es hierbei sinnvoll, dass die einzelnen Halteklinken im Verhältnis zur Kistenlänge relativ schmal sind, d. h. sich nicht über einen sehr großen Bereich, beispielsweise über den gesamten mittleren Bereich der Kiste, erstrecken. Daher ist es erforderlich, dass zur sicheren Halterung einer Kiste diese zumindest an zwei vorzugsweise in einem größeren Abstand zueinander liegenden Stellen entlang einer Kistenseite gehalten wird. Vorteilhafterweise erfolgt eine solche Halterung möglichst in einem in Kistenlängsrichtung vorderen und einem hinteren Bereich. Um immer eine sichere Halterung zu gewährleisten, sind dabei erfindungsgemäß jeder Kistenseite mindestens vier Halteklinken zugeordnet. Diese Halteklinken sind beispielsweise gleichmäßig über die Kistenlänge verteilt angeordnet. Bei einer bevorzugten Variante sind die Halteklinken jedoch gruppenweise, beispielsweise bei vier Halteklinken paarweise, in voneinander beabstandeten Bereichen entlang der Kistenseite angeordnet. Dabei sind die jeweils zu einer Halteklinkengruppe bzw. einem Halteklinkenpaar gehörigen Halteklinken unmittelbar nebeneinander oder bevorzugt mit einem kurzen Abstand, welcher z. B. im Wesentlichen der Dicke eines Stabilisierungsstegs entspricht, nebeneinander angeordnet. Die Situation, in der beide Halteklinken eines solchen Halteklinkenpaares auf einen Stabilisierungssteg treffen, kann dann bei einer Vielzahl von Kistentypen sicher ausgeschlossen werden. So befinden sich bevorzugt bei einem Einsatz von nur vier Klinken pro Kistenseite zumindest zwei Halteklinken in einem in Längsrichtung der Kiste vorderen Bereich und zwei im hinteren Bereich der Kiste.

Zur Erhöhung der Sicherheit können vorzugsweise auch mehr als vier Halteklinken pro Kistenseite vorgesehen sein, beispielsweise eine fünfte Sicherheits-Halteklinke im mittleren Bereich der Kiste oder besonders bevorzugt mindestens sechs Halteklinken, wobei bevorzugt wiederum zwei Halteklinken als weitere Gruppe bzw. weiteres Halteklinkenpaar beispielsweise im mittleren Bereich und jeweils zwei Halteklinken paarweise im vorderen und im hinteren Bereich der Kiste angeordnet sind.

Um nahezu vollkommen unabhängig von der Art der einzulagernden Kiste sowie deren Abmessungen und der Lage der Stabilisierungsstege an der Kiste zu sein und auch beliebige Kistenformen in einer Reihe einlagern zu können, ist vorzugsweise jeder Kistenseite eine sich zumindest über einen Bereich der Kiste erstreckende, durchgehende Reihe von unmittelbar oder in einem kurzen Abstand zueinander benachbarten Halteklinken zugeordnet.

Eine solche nach Art einer Klaviatur aufgebaute Halteklinken-Reihe kann sich quasi an die Kontur der Seitenwand mitsamt ihren Stabilisierungsstegen anpassen. Unabhängig von der Position der Kiste sowie von der Lage, Breite und Anzahl der Stabilisierungsstege an der Kistenseitenwand ist dabei immer sichergestellt, dass eine ausreichende Anzahl von einzelnen Halteklinken die Kiste greifen und die Kiste somit über die gesamte Länge sicher gehalten wird.

Die Aufgabe wird außerdem durch ein Kistenstapellager gemäß Patentanspruch 5 gelöst.

Bei dieser Variante sind die Halteklinken, vorzugsweise einzeln, zumindest über einen bestimmten Bereich entlang einer Kistenwand an der betreffenden Kistenseite verschiebbar gelagert. Bei dieser Variante können folglich die Halteklinken zum Halten der Kiste entsprechend der aktuellen Position der Stabilisierungsstege so eingestellt werden, dass sie neben den Stabilisierungsstegen an der Kistenwand zur Anlage kommen und die Kiste greifen können.

Bei einem besonders bevorzugten Ausführungsbeispiel weist das Kistenstapellager eine Kombination der Merkmale beider Varianten auf, d. h. dass jeder Kistenseite mindestens vier Halteklinken zugeordnet sind, die synchronisiert ansteuerbar sind und einzeln quer zu einer Kistenseitenwand an der betreffenden Kistenseite verschiebbar und/oder verschwenkbar gelagert sind und zudem noch entlang der Kistenwand an der betreffenden Kistenseite verschiebbar gelagert sind. Dadurch wird insbesondere bei Kisten mit einer Vielzahl von Stabilisierungsstegen die Anzahl der einzelnen Klinken, die unmittelbar an der Kistenwand so zur Anlage kommen, dass sie die Kiste greifen können, erhöht und die Anzahl der Klinken reduziert, welche bei einer bestimmten Kiste an einem Stabilisierungssteg zur Anlage kommen und daher keinen Beitrag zur Halterung der Kiste bzw. des darüber befindlichen Kistenstapels liefern.

Die weiteren abhängigen Ansprüche enthalten jeweils besonders vorteilhafte Ausgestaltungen und Weiterbildungen der Erfindung.

Das Verschieben der einzelnen Halteklinken entlang einer Kistenwand an der betreffenden Kistenseite kann durch einen geeigneten steuerbaren Antrieb, beispielsweise motorisch, pneumatisch, hydraulisch etc., erfolgen. Da eine solche dezidierte Ansteuerung der einzelnen Halteklinken erheblichen Aufwand erfordert, umfassen die Halteklinken bei einem besonders bevorzugten Ausführungsbeispiel einen Halteklinkenkopf, der bei einer Halterung einer Kiste an der betreffenden Kistenseite zur Anlage kommt und der sich in Richtung auf die Kistenwand hin verjüngt. Das heißt, der Querschnitt des Halteklinkenkopfs parallel zur Längsrichtung der Kistenseitenwand wird in Richtung auf die Kistenwand hin immer kleiner. Beispielsweise können die Halteklinkenköpfe so ausgebildet sein, dass sie konisch in Richtung auf die Kistenseitenwand hin zulaufen oder halbkreisförmig in Richtung auf die Kistenseitenwand hin ausgebildet sind. Dies hat den Vorteil, dass eine Halteklinke, wenn sie auf einen Stabilisierungssteg an der Kistenwand trifft, durch eine durch diese spezielle Form am Halteklinkenkopf gebildete Schräge seitlich von dem Führungssteg weggedrückt wird und so doch noch an der Kistenwand zur Anlage kommt und die Kiste greifen kann. Das heißt, es wird automatisch zumindest ein Teil derjenigen Halteklinken, die zunächst an einer Position liegen, an der sie auf einen Stabilisierungssteg einer Kiste stoßen, von diesem weg verschoben, ohne dass es einer gezielten Ansteuerung der Halteklinkenposition in Längsrichtung der Kiste bedarf.

Ebenso ist es auch möglich, die einzelnen Halteklinken zum Verriegeln, d. h. zum Halten einer Kiste, und zum Entriegeln, d. h. zur Freigabe einer Kiste, jeweils separat motorisch anzusteuern. Insbesondere bei Konstruktionen, bei denen jeder Kistenseite eine sehr große Anzahl von Halteklinken, beispielsweise wie zuvor beschrieben eine ganze Klaviatur von Halteklinken, zugeordnet ist, ist dies ebenfalls relativ teuer und aufwändig. Daher sind bei einem besonders bevorzugten Beispiel die einzelnen einer Kiste zugeordneten Halteklinken mittels eines gemeinsamen Entriegelungsmechanismus entriegelbar und/oder verriegelbar. Bei einer ganz besonders bevorzugten Variante sind die Halteklinken an einem Klinkenträger beweglich gelagert, welcher zur Entnahme der Kiste so ansteuerbar ist, dass die Halteklinken gemeinsam entriegelt werden.

Bei einem besonders bevorzugten Ausführungsbeispiel, bei dem im Kistenstapellager - wie meist üblich - mehrere Kistenstapel in einer Reihe hintereinander einlagerbar sind, sind außerdem auch die Halteklinken, welchen verschiedene Kisten in einer Reihe zugeordnet sind, an einem gemeinsamen Klinkenträger beweglich gelagert. Es reicht dann die Ansteuerung des gemeinsamen Klinkenträgers, um dafür zu sorgen, dass alle an dem gemeinsamen Klinkenträger gelagerten Halteklinken entriegelt werden und entsprechend gleichzeitig alle zugeordneten Kisten freigegeben werden. Bei einem besonders bevorzugten Ausführungsbeispiel erstreckt sich der Klinkenträger über die gesamte Reihe. In diesem Fall reicht es zur Entnahme der kompletten Kistenreihe aus, den Klinkenträger an einer Stelle zu entriegeln.

Alternativ können die Halteklinken einer Kiste bzw. bevorzugt mehrerer Kisten in einer Reihe, besonders bevorzugt sämtlicher Kisten in einer Reihe, auch mit einem anderen gemeinsamen Entriegelungsmechanismus, beispielsweise einer parallel zur Kistenlängsrichtung bzw. Reihenlängsrichtung verlaufenden Stange oder dergleichen gekoppelt sein, welche die einzelnen Halteklinken in eine Entriegelungs- oder Verriegelungsstellung bewegt.

Die Halteklinken und der Klinkenträger bzw. der Entriegelungsmechanismus sollten dabei bevorzugt so ausgebildet sein, dass die Halteklinken den Klinkenträger bzw. den Entriegelungsmechanismus der eigenen Reihe oder einer benachbarten Reihe, deren Halteklinken z. B. am selben Längsträger gelagert sind, nicht blockieren können, auch wenn die Halteklinken durch einen Stabilisierungssteg der Kiste aus der Verriegelungsstellung gedrückt werden.

Grundsätzlich können die Halteklinken und/oder Klinkenträger in verschiedensten Varianten aufgebaut und am Gestell angeordnet sein, beispielsweise auch quer zur Kistenwand längsverschiebbar, z. B. federnd, gelagert sein. Bevorzugt sind sie jedoch in Form von Fallklinken ausgebildet, die um eine horizontale, parallel zur Längserstreckung der Kistenseitenwand verlaufende Schwenkachse gegen die jeweilige Kistenseite verschwenkbar am Gestell, üblicherweise an den die Kistenreihen jeweils seitlich begrenzenden Trägern des Gestells gelagert sind. Dabei untergreifen die Halteklinken mit einem obenseitigen Klinkenkopf eine an der Seitenwand befindliche, bei der Lagerung der Kiste horizontal verlaufende Auskragung, wobei es sich hier in der Regel um den am Boden der Kiste umlaufenden Kragen handelt, da die Kisten üblicherweise kopfüber, d. h. mit der Kistenöffnung nach unten, im Kistenlager eingelagert werden.

Auch die Lagerung der einzelnen Halteklinken an einem gemeinsamen Klinkenträger kann auf verschiedenste Weise erfolgen. Bei einem besonders bevorzugten Ausführungsbeispiel sind die Halteklinken jeweils um eine horizontale, parallel zur Längserstreckung der Kistenseitenwand verlaufende zweite Schwenkachse gegen die jeweilige Kistenseite verschwenkbar am Klinkenträger gelagert. Sofern die Klinkenträger selber - wie zuvor beschrieben - um eine horizontale, parallel zur Längserstreckung der Seitenwand verlaufende erste Schwenkachse gegen die Kistenseite verschwenkbar am Gestell gelagert sind, sind folglich die Klinken um eine an dem Klinkenträger befindliche zweite Schwenkachse verschwenkbar, welche selbst wiederum um die erste Schwenkachse des Klinkenträgers am Gestell verschwenkbar gelagert ist. Damit kann der Kopf der Halteklinke, anders als bei einer einfachen schwenkbaren Lagerung der Halteklinke, nicht nur entlang einer Kreisbahn um eine parallel zur Kistenlängsrichtung verlaufende Schwenkachse bewegt werden, sondern ist ähnlich einem gekoppelten Pendel um die erste Schwenkachse beweglich gelagert. Insbesondere, wenn bei einer solchen Variante auch die einzelnen Halteklinken, zumindest entlang einem bestimmten Bereich der Kistenseite, in Längserstreckung frei verschiebbar gelagert sind, werden die Kistenstapel durch diesen Klinkenmechanismus "schwimmend" gelagert. Daher können Toleranzen in den Kistenmaßen und den Kistenpositionen bei der Ein- und Auslagerung einfach ausgeglichen werden und es wird immer ein stabiler Kistenstapel aufgebaut. Dabei sollten die Halteklinken in der Verriegelungsstellung soweit in eine Reihe zwischen zwei Träger hereinragen können, dass eine bestimmte Verschiebung der Kisten auch quer zur Kistenlängsrichtung möglich ist.

Um zu vermeiden, dass sich eine Kiste, welche mit der Öffnung nach unten im Kistenstapel eingelagert ist, hinter den Halteklinken verkantet, sind die Halteklinken vorzugsweise derart am Gestell des Kistenstapellagers angeordnet und weisen jeweils an ihrer Oberseite zumindest über einen sich längs zur Kistenseitenwand erstreckenden Abschnitt quer zur Kistenseitenwand eine derartige Dicke auf, dass ein Abstand zwischen der von der Kiste wegweisenden Oberkante einer Halteklinke zu einer benachbarten Kante des Gestells, z. B. eines die Reihe seitlich begrenzenden Trägers oder eines daran befindlichen Bauteils, kleiner ist als die Breite der Oberkante einer einzulagernden Kiste. Die Halteklinken weisen damit jeweils an ihrer Oberseite zumindest über den sich längs zur Kistenseitenwand erstreckenden Abschnitt quer zur Kistenseitenwand eine derartige Dicke auf und es sind jeweils zwei an sich gegenüberliegenden Kistenseiten einer einzulagernden Kiste angeordnete Halteklinken derart angeordnet, dass der Abstand der beiden von der Kiste wegweisenden Oberkanten der Halteklinken größer ist als ein lichtes Innenmaß der Kiste.

Bei einer solchen Ausbildung und Anordnung der Halteklinken kann es allenfalls noch vorkommen, dass eine Kiste im Lager auf der Oberseite der Halteklinken hängen bleibt und nicht in die gewünschte Position nach unten rutscht, wenn die darunter befindliche Kiste ausgelagert wird. Es kann jedoch nicht passieren, dass die Kiste mit ihren Seitenwänden von oben hinter die Halteklinken rutscht und diese für eine weitere Einlagerung von Kisten oder zur weiteren Entnahme von Kisten blockiert.

Je nach Ausbildung und Anordnung der Halteklinken und/oder Klinkenträger, insbesondere des Gewichts und der Gewichtsverteilung relativ zu den Schwenkachsen, ist es ausreichend, dass die Halteklinken und/oder Klinkenträger allein durch die Schwerkraft in eine Verriegelungsposition gebracht werden, so dass sie an einer zu haltenden Kiste anliegen bzw. in den freien Raum zwischen zwei eine Kistenlagerreihe begrenzenden Trägern hineinragen. Bei einer bevorzugten Variante sind jedoch die Halteklinken und/oder die Klinkenträger federnd gelagert, so dass sie ausschließlich oder zusätzlich durch die Federkraft in die Verriegelungsstellung gebracht werden.

Wie das eingangs genannte Kistenstapellager weist auch das erfindungsgemäße Kistenstapellager bevorzugt eine unter den eingelagerten Kisten angeordnete Transporteinrichtung mit einer Hubvorrichtung auf, welche im Betrieb einzulagernde Kisten von unten in den Kistenstapel verbringt und auszulagernde Kisten unter dem jeweiligen Kistenstapel abholt.

Besonders bevorzugt umfasst die Transportvorrichtung dabei ein Schaltelement, welches zum Auslagern einer Kiste so auf die der betreffenden Kiste zugeordneten Halteklinken und/oder einen zugehörigen Klinkenträger einwirkt, dass die Halteklinken entriegelt werden. Es ist dann nicht erforderlich, die einzelnen Klinken bzw. Klinkenträger einzeln synchronisiert motorisch anzusteuern. Anstelle einer motorischen Ansteuerung an jeder Kistenreihe ist dann außerdem nur noch an der zur Verfügung stehenden Transportvorrichtung eine entsprechende motorische Ansteuerung der Schaltelemente erforderlich.

Das Schaltelement kann bevorzugt an der Hubvorrichtung angeordnet sein und z. B. beim oder nach dem Hochfahren der Hubvorrichtung unter die unterste Kiste zwischen einer ersten Schaltstellung zur Entriegelung der Halteklinken und einer zweiten Schaltstellung, in welcher die Halteklinken in einem angehobenen Zustand der Hubvorrichtung nicht entriegelt werden, hin- und herschaltbar sein.

Grundsätzlich kann ein solches Lager beispielsweise auch nur eine einzelne Reihe aufweisen, unter der sich die Transportvorrichtung erstreckt. Bei einem bevorzugten Ausführungsbeispiel weist das Kistenstapellager jedoch mehrere nebeneinander angeordnete Reihen zur Lagerung von Kistenstapeln und einen sich längs der Reihen erstreckenden Transportwagen auf, welcher quer zu den Reihen verfahrbar ist.

Die Erfindung wird im Folgenden unter Hinweis auf die beigefügten Figuren anhand von Ausführungsbeispielen noch einmal näher erläutert. Dabei sind gleiche Komponenten in den verschiedenen Figuren durch identische Bezugsziffern gekennzeichnet. Es stellen dar:
Figur 1 eine schematische Seitenansicht eines Kistenstapellagers,
Figur 2 eine perspektivische Ansicht einer Kiste, welche auf gegenüberliegenden Seiten von jeweils einem Klinkenmechanismus untergriffen wird,
Figur 3a bis Figur 3d eine Sequenz von schematischen Querschnittdarstellungen des Kistenstapellagers gemäß Figur 1 beim Auslagern einer Kiste,
Figur 4a bis Figur 4c eine Sequenz von vergrößerten schematischen Querschnittdarstellungen ähnlich den Figuren 3a bis Figur 3d, jedoch beim Einlagern einer Kiste,
Figur 5a einen vergrößerten Querschnitt durch den Klinkenmechanismus gemäß Figur 1 für zwei aneinandergrenzende Kistenreihen, jeweils in unterschiedlichen Positionen der Halteklinken,
Figur 5b einen vergrößerten Querschnitt durch den Klinkenmechanismus gemäß Figur 1 für zwei aneinandergrenzende Kistenreihen, jeweils in weiteren unterschiedlichen Positionen der Halteklinken,
Figur 6 eine schematische Seitenansicht eines Klinkenmechanismus bei der Halterung einer Kiste,
Figur 7 eine schematische Draufsicht auf zwei an gegenüberliegenden Seiten einer eingelagerten Kiste angeordnete Klinkenmechanismen mit einem Schnitt durch die darin gehaltene Kiste,
Figur 8 eine schematische Draufsicht auf einen Ausschnitt einer Reihe des Kistenstapellagers mit mehreren in der Reihe gehaltenen Kisten, wobei auch zwei kürzere Kisten gemeinsam durch zwei gegenüberliegende Klinkenmechanismen gehalten werden,
Figur 9 eine seitliche Ansicht eines sich über mehrere Kisten erstreckenden Klinkenträgers mit einer Vielzahl daran angeordneter einzelner Halteklinken.

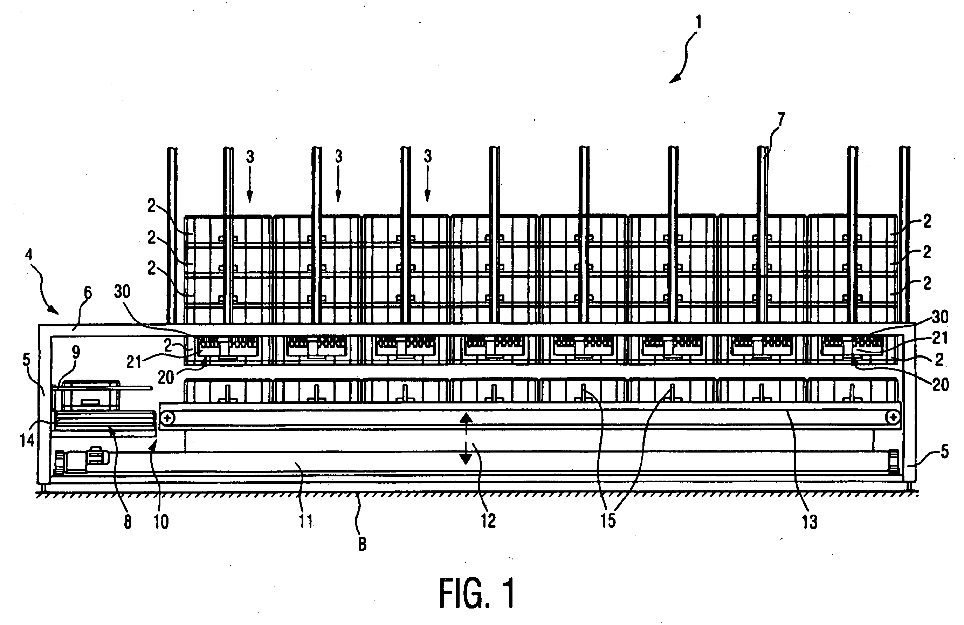

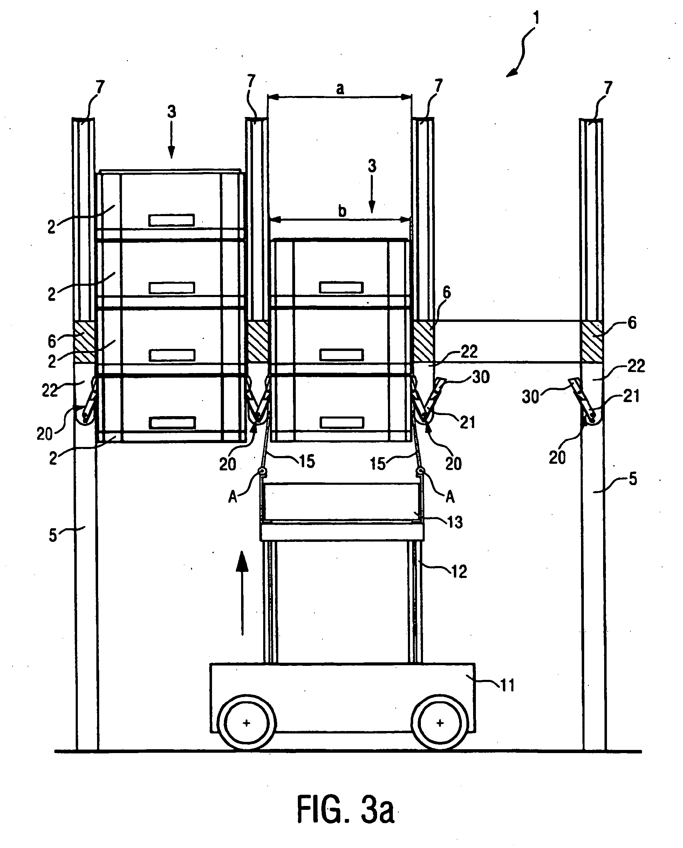

Wie insbesondere in den Figuren 1 sowie 3a bis 3c gezeigt wird, weist das Kistenstapellager 1 gemäß dem vorliegenden Ausführungsbeispiel ein Gestell 4 auf, in welchem Kisten 2 in mehreren nebeneinander und hintereinander, d. h. matrixförmig in Reihen und Spalten, angeordneten Kistenstapeln 3 gelagert werden. Hierbei werden die Kistenstapel 3 jeweils an ihrer untersten Kiste 2 mittels Klinkenmechanismen 20 durch mehrere Halteklinken 30 in einem Abstand über dem Boden B gehalten.

Das Gestell 4 weist mehrere parallel nebeneinander angeordnete, auf Ständern 5 aufgeständerte Längsträger 6 auf, deren Abstand a zueinander größer ist als die Breite b einer einzulagernden Kiste 2 (Figuren 3a bis 3d). An diesen Längsträgern 6 befinden sich in Längserstreckung der Träger 6 hintereinander jeweils mehrere Klinkenmechanismen 20, welche sich entsprechend an benachbarten Längsträgern 6 gegenüberliegen. Diese halten jeweils eine Reihe von in Längsträgerrichtung (d. h. in einer Reihenlängsrichtung R_{L}) hintereinander gelagerten Kistenstapeln 3. An den Längsträgern 6 sind sich nach oben erstreckende Sicherungsstangen 7 angeordnet, welche die Kistenstapel 3 seitlich sichern. Sie können eine nahezu beliebige Länge aufweisen und sind vorzugsweise leicht austauschbar.

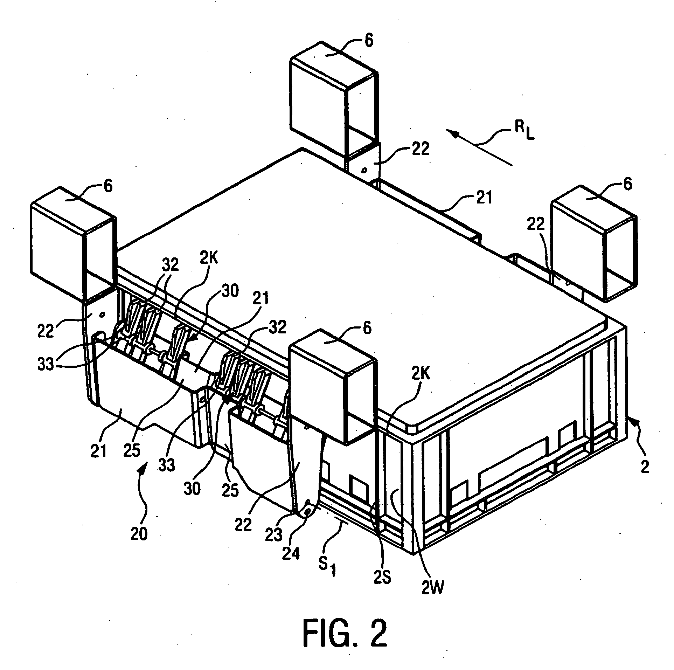

Der detaillierte Aufbau der Klinkenmechanismen 20 ist am besten aus den Figuren 2, 5a, 5b, 6, 7 und 8 erkennbar.

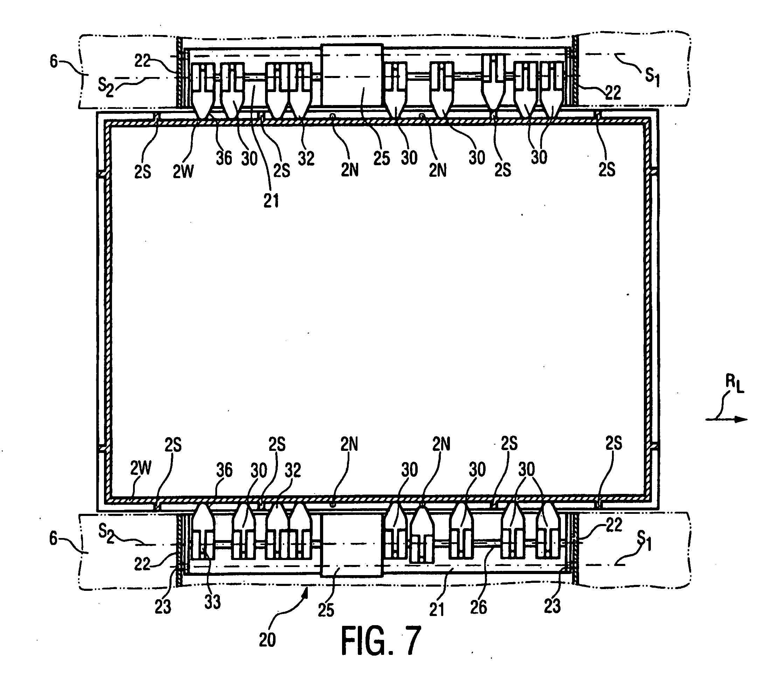

Jeder Klinkenmechanismus 20 besteht aus einem Klinkenträger 21 und daran gelenkig befestigten einzelnen Klinken 30. Der Klinkenträger 21 erstreckt sich dabei im Wesentlichen parallel zur Reihenlängsrichtung R_{L} einer Kistenstapel-Reihe (siehe Figuren 7 bis 9) und somit parallel zu einer Seitenwand 2W der jeweils einzulagernden Kisten (siehe Figur 2). Endseitig ist ein solcher Klinkenträger 21 jeweils um eine parallel zur Reihenlängsrichtung R_{L} verlaufende Schwenkachse S₁ verschwenkbar an Haltelaschen 22 befestigt, welche wiederum an den Längsträgern 6 befestigt sind.

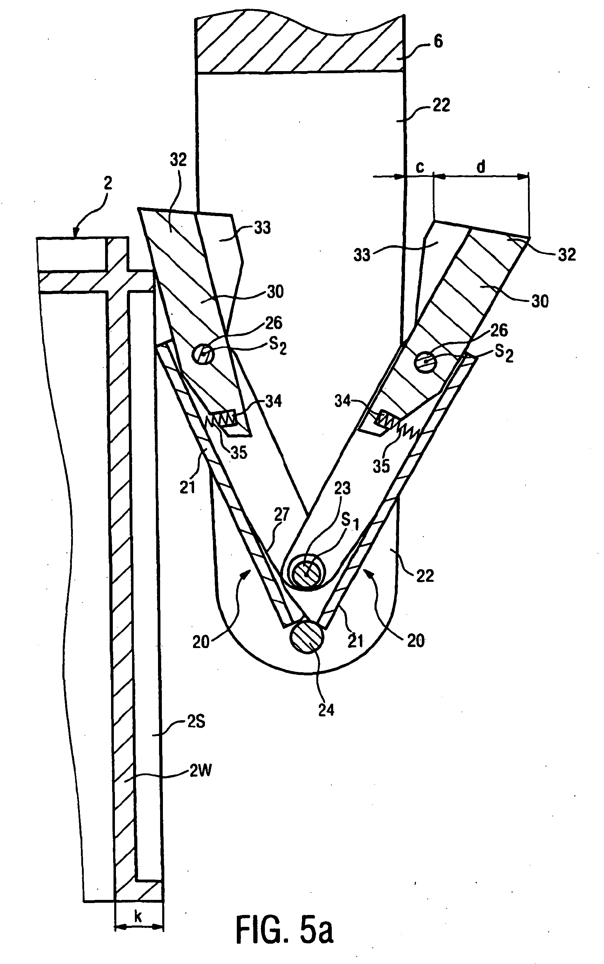

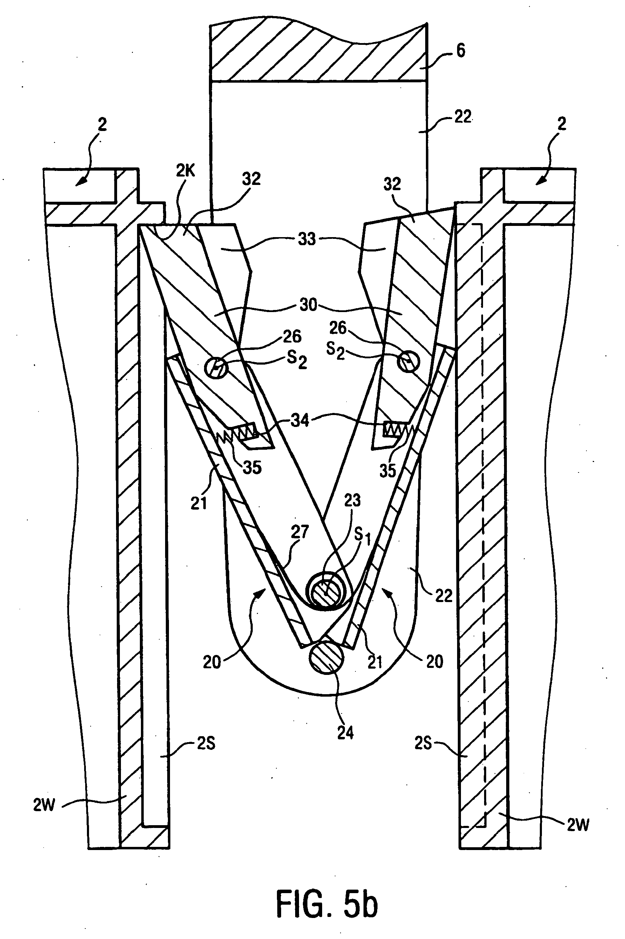

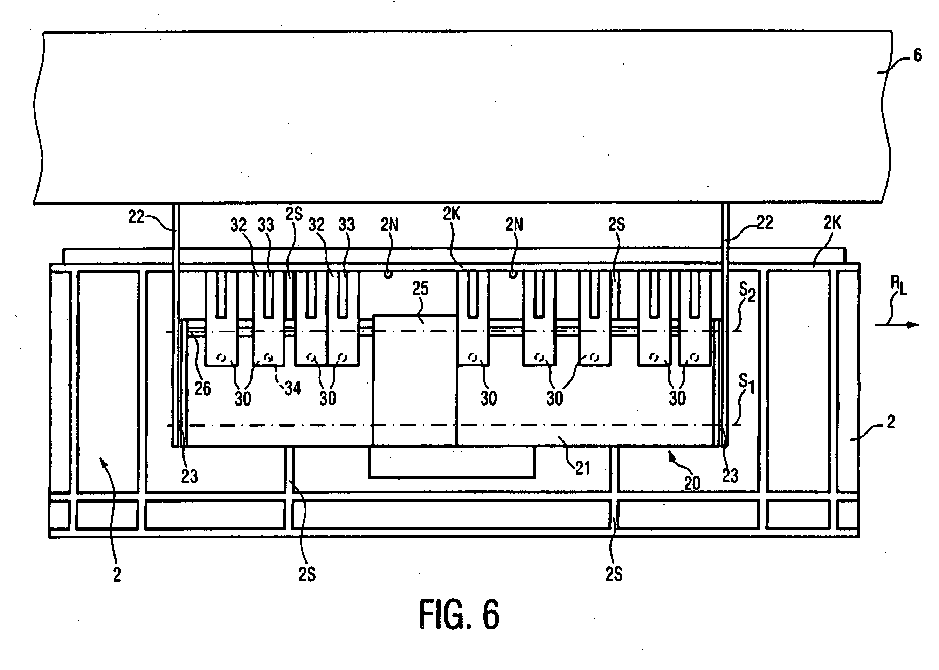

Dabei sind jeweils zwei sich gegenüberliegende, zu benachbarten Reihen gehörende Klinkenträger 21 gemeinsam zwischen zwei Haltelaschen 22 schwenkbar gelagert (siehe Figuren 2, 5a und 5b). In Figur 2 sind der besseren Übersichtlichkeit wegen vom vorderen Teil des Klinkenmechanismus 20 nur der Klinkenträger 21 und nicht die einzelnen Halteklinken dargestellt. Ebenso sind in den Figuren 6, 7 und 8 der Übersichtlichkeit wegen nur die Klinkenträger 21 mit den zugehörigen Halteklinken 30 der jeweils dargestellten Kistenreihe abgebildet. Auf die Abbildung der üblicherweise an den Haltelaschen 22 - welche zwischen zwei Kistenreihen angeordnet sind - ebenfalls gelagerten Klinkenträger der benachbarten Kistenreihen wurde verzichtet. Die Lagerung zwischen den Haltelaschen 22 erfolgt mittels zweier in einem Abstand vom unteren Ende der Laschen 22 angeordneter Schwenkbolzen 23, so dass die Klinkenträger 21 aufgrund der Schwerkraft nach außen in eine Verriegelungsstellung klappen (siehe Figur 5a, rechte Seite). Um ein vollständiges Überklappen der Klinkenträger 21 zu verhindern, befindet sich unterhalb des Schwenkbolzens 23 jeweils ein Anschlagbolzen 24, gegen den die Klinkenträger 21 in der Verriegelungsstellung anschlagen. Das Herunterklappen der Klinkenträger 21 in die Verriegelungsstellung wird durch eine sich zwischen den Klinkenträgern 21 zweier benachbarter Reihen erstreckende Feder 27 unterstützt.

Die Klinkenträger 21 sind jeweils an ihrem der Schwenkachse S₁ gegenüberliegenden oberen Ende mit einer Anzahl von einzelnen Halteklinken 30 bestückt. Die Halteklinken 30 sind dabei um eine parallel zur ersten Schwenkachse S₁ der Klinkenträger 21 verlaufende zweite Schwenkachse S₂ verschwenkbar. Hierzu sind sämtliche Halteklinken 30 jeweils mit einer Bohrung in einem Abstand von ihrem unteren Ende versehen und auf einer parallel zum Klinkenträger 21 bzw. zu dessen Schwenkachse S₁ verlaufenden Welle 26 am Klinkenträger 21 gelagert. Wie in Figur 2 zu sehen ist, ist der Klinkenträger 21 aus einem Blech geformt, welches jeweils an den Haltelaschen 22 unter Bildung eines U-Profils umgebogen ist. Im mittleren Bereich des Klinkenträgers 21 ist ein weiterer U-Profil-artiger Abschnitt ausgebildet, welcher eine Steuerfläche 25 bildet, deren Funktion später noch näher erläutert wird.

Zur Beschreibung der Form der einzelnen Klinken 30 wird auf die Figuren 2, 5a, 5b und 7 verwiesen. Wie dort erkennbar ist, weisen die einzelnen Halteklinken 30 an ihrem oberen Ende einen Klinkenkopf 32 auf, welcher zum Halten einer Kiste 2 an der Kistenseitenwand 2W zur Anlage kommt. Beim Halten liegt das obere Ende des Klinkenkopfes 32 unter einem aus der Kistenwand 2W herausragenden Kragen 2K, hier dem umlaufenden Kragen 2K an der Bodenseite der Kiste 2 (siehe Figur 2). Die Kiste 2 wird durch die an zwei gegenüberliegenden Kistenseiten an den Längsträgern 6 bzw. den daran befestigten Klinkenträgern 21 gelagerten Halteklinken 30 sicher gehalten (siehe Figuren 3a, 4c und 7 bis 9).

Die Schwenkachse S₂ ist hier wiederum in einer Höhe der Halteklinken 30 angebracht, so dass die Halteklinken 30 aufgrund der Schwerkraft von sich aus in die Verriegelungsstellung kippen, sobald der Klinkenträger 21 nach unten geklappt ist. Zusätzlich sind die Halteklinken 30 über Schraubenfedern 35 auf einer Fläche des Klinkenträgers 21 abgestützt. Diese Federn 35 sind jeweils in Sacklöchern 34 in einem Abstand vom unteren Ende der Halteklinke 30 gehalten (Figuren 5a bis 5d). Durch diese Federn 35 werden die einzelnen Halteklinken 30 relativ zum Klinkenträger 21 in die Verriegelungsstellung gedrückt. Bei einem nicht dargestellten, alternativen Ausführungsbeispiel sind die Klinken so am Klinkenträger angeordnet, dass sie nicht durch die Schwerkraft, sondern allein durch die Federn in die Verriegelungsstellung verbracht werden.

Die einzelnen Halteklinken 30 sind dabei in Längsrichtung der Schwenkachse S₂ verschiebbar auf der am Klinkenträger 21 befestigten Welle 26 angeordnet. Außerdem ist bei dem dargestellten bevorzugten Ausführungsbeispiel dafür gesorgt, dass die Klinken nicht dicht zwischen den Endlagerungen der Welle 26 am Klinkenträger 21 eingeschlossen sind, sondern genügend Platz haben, sich entlang der Welle 26 nach rechts und links zu bewegen.

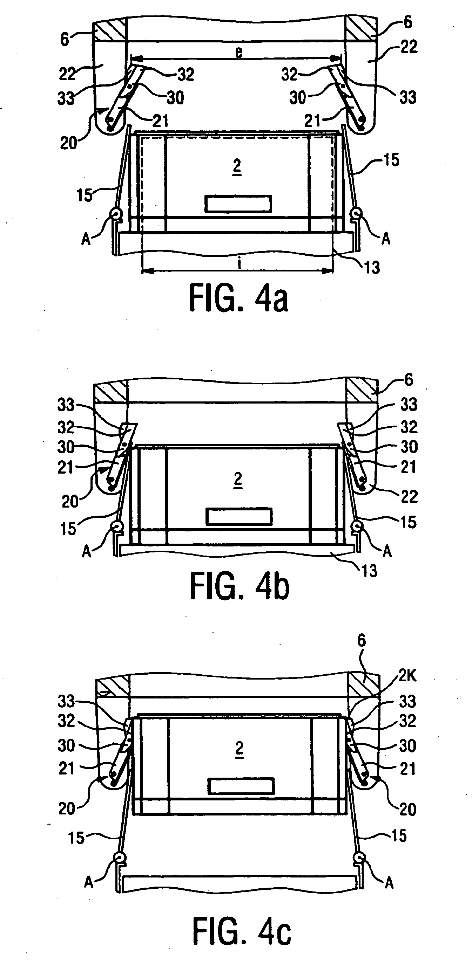

Der Klinkenkopf 32 weist eine besondere Form auf. Zum einen befindet sich an der von der Kiste 2 wegweisenden Seite des Klinkenkopfs 32 ein Verbreiterungssteg 33. Mit Hilfe dieses Verbreiterungsstegs 33 wird dafür gesorgt, dass die Halteklinken 30 jeweils an ihrer Oberseite zumindest im Bereich des Verbreiterungsstegs 33 quer zur Kistenseitenwand 2W eine Dicke d aufweisen, so dass der Abstand c zwischen der von der Kiste 2 wegweisenden Oberkante der Halteklinke 30 zu einer benachbarten Kante der Haltelasche 22 kleiner ist als die Breite k einer Oberkante einer einzulagernden Kiste 2 (siehe Figur 5a). Dadurch ist im Übrigen auch der Abstand e der beiden von einer einzulagernden Kiste 2 weg weisenden Oberkanten der an verschiedenen Kistenseiten angreifenden Halteklinken 30 größer als ein lichtes Innenmaß i der Kiste 2 (Figur 4a). Somit ist dafür gesorgt, dass nicht beim Auslagern einer Kiste 2 die darüber liegende Kiste 2 so herunterrutscht, dass sie mit den Seitenwänden 2W zwischen die zum Längsträger 6 weisenden Seiten der Halteklinken 30 und die Haltelaschen 22, an welchen die Klinkenträger 21 befestigt sind, rutschen, wodurch die Klinken 30 für die weitere Entnahme oder Einlagerung einer Kiste 2 blockiert würden. Andererseits ragen die oberen Enden der Klinkenköpfe 32 so weit in den Freiraum zwischen zwei benachbarten Längsträgern 6 hinein, dass sie erhebliche Schwankungen in der Breite der verschiedenen einzulagernden Kisten 2 ausgleichen können.

Die Klinkenköpfe 32, welche bei der Halterung einer Kiste 2 an der Kistenwand 2W der betreffenden Kistenseite zur Anlage kommen, sind in Richtung auf die Kistenwand 2W hin verjüngt, d. h. der Querschnitt des Klinkenkopfs 32 parallel zur Längserstreckung der Kistenwand 2W wird immer kleiner. Dies ist in Figur 7 deutlich zu erkennen. Dadurch sind am Klinkenkopf 32 jeweils schräge Flächen als Steuerflächen 36 ausgebildet. Diese spezielle Ausbildung der Klinkenköpfe 32 hat den Vorteil, dass, wenn ein Klinkenkopf 32 mit dieser schrägen Steuerfläche 36 bei der Verriegelung zunächst auf einen Stabilisierungssteg 2S oder eine Nase 2N an der Seitenwand 2W einer Kiste 2 auftrifft, die verschiebbar auf der Welle 26 gelagerte Halteklinke 30 parallel zur Reihenlängserstreckung R_{L} seitlich weg geschoben wird und doch noch unter dem Kragen 2K der Kiste 2 unmittelbar an der Kistenwand 2W zur Anlage kommt und somit die Kiste 2 ebenfalls hält. Lediglich in den Fällen, in denen die Halteklinke 30 genau mittig auf einen Stabilisierungssteg 2S trifft, wird diese einzelne Halteklinke 30 entgegen der durch die Feder 35 wirkenden Kraft um die Welle 26 im Klinkenträger 21 nach oben weggekippt und liegt dann an dem Stabilisierungssteg 2S an (siehe Figuren 7 und 5b, rechte Seite). Da aber eine Vielzahl von weiteren einzelnen Halteklinken 30 neben den Stabilisierungsstegen 2S die Kiste 21 greifen (siehe Figuren 7 und 5b, linke Seite), ist sichergestellt, dass die Kiste 2 insgesamt durch den Klinkenmechanismus 20 sicher gehalten wird.

Insbesondere aus den Figuren 5b und 7 ist deutlich der Vorteil dieser Konstruktion erkennbar. Der gesamte Klinkenmechanismus 20 ist außerordentlich flexibel und sorgt für eine sichere Halterung der Kisten, unabhängig davon, an welcher Position genau die Kiste einen Stabilisierungssteg 2S oder ähnliche Elemente, wie beispielsweise unter dem Kragen 2K am Kistenboden an der Seitenwand befindliche Haltenasen zur Etikettenarretierung etc., aufweist. Soweit dies möglich ist, werden die einzelnen Halteklinken 30 automatisch neben diese störenden Elemente der Kiste 2 verschoben, ohne dass durch eine externe Steuerung eingegriffen werden muss. Andernfalls werden sie, ohne die Funktionen der übrigen Halteklinken 30 zu beeinflussen - insbesondere ohne die benachbarten Halteklinken 30 der gleichen Reihe oder Halteklinken 30 in benachbarten Reihen zu blockieren - von der Kistenwand 2W weggedrückt und die Kiste 2 wird sicher durch die weiteren im Klinkenmechanismus 20 befindlichen Halteklinken 30 gehalten. Dadurch ist es insbesondere auch möglich, verschiedenste Kisten mit unterschiedlichen Abmessungen innerhalb einer Reihe einzulagern.

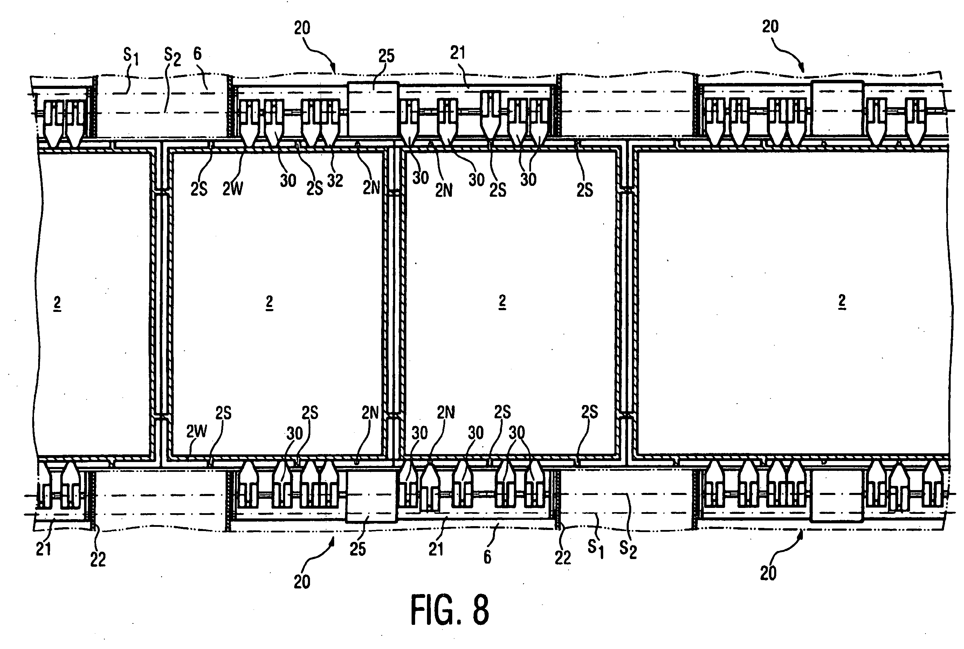

So können beispielsweise, wie in Figur 7 gezeigt, große Kisten 2 eingelagert werden, deren Breite etwas unter dem lichten Innenmaß a zwischen zwei benachbarten Längsträgern 6 einer Reihe liegt, wobei die Länge der Kisten 2 sich beispielsweise über einen Klinkenträger 21 hinaus erstreckt, d. h. dass jeder Kiste 2 (bzw. jeder Seite der Kiste) am jeweiligen Längsträger 6 genau ein Klinkenträger 21 mit den daran angeordneten Halteklinken 30 zugeordnet ist. Es können aber auch genauso gut Kisten 2 der halben Größe eingelagert werden, deren Länge in etwa der Breite der größeren Kisten entspricht und deren Breite der halben Länge der größeren Kisten entspricht. In diesem Fall können beispielsweise zwischen zwei gegenüberliegenden Klinkenmechanismen 20 zwei solcher Kisten 2 nebeneinander gelagert werden (siehe Figur 8). Insbesondere ist es auch möglich, diese Kisten innerhalb einer Reihe zu mischen, wobei je nach genauer Konstruktion des Lagers unter Umständen darauf geachtet werden sollte, dass immer zwei kleine Kisten 2 in der Reihe hintereinander eingelagert werden.

Im Folgenden wird anhand der Figuren 1 und 3a bis 3d erläutert, wie die Entnahme von Kisten aus dem Kistenstapellager 1 erfolgt. Figur 3a zeigt hierzu vereinfacht ein Lager 1 mit drei nebeneinander liegenden Reihen. In der Regel weist ein solches Kistenstapellager 1 eine erheblich größere Anzahl von Reihen auf. In den Kistenstapeln 3 der linken Reihe sind jeweils vier Kisten 2 und in den Kistenstapeln 3 der mittleren Reihe drei Kisten 2 übereinander gestapelt, wogegen die linke Reihe leer ist.

Der Transportwagen 11 der Beschickungseinrichtung 10 ist zur Auslagerung der untersten Kistenreihe aus der mittleren Kistenstapelreihe 3 unter diese mittlere Kistenstapelreihe 3 verfahren worden, und die Hubvorrichtung 12 wird unter dieser Kistenstapelreihe 3 nach oben gefahren.

An dieser Hubvorrichtung 12, auf welcher obenseitig ein Transportband 13 angeordnet ist, das sich, wie in Figur 1 dargestellt, längs unter der ganzen Reihe erstreckt, sind jeweils Steuerelemente 15 in Form von Steuerstiften 15 um eine parallel zur Reihenlängsrichtung L_{R} verlaufende Achse A schwenkbar angeordnet. Hierbei ist jedem Klinkenmechanismus 20 in der Reihe ein entsprechender Steuerstift 15 an der Hubvorrichtung 12 zugeordnet, wobei alle Steuerstifte 15 mit einer Welle gekoppelt sind, so dass durch Drehen dieser Welle um die Schwenkachse A sämtliche Steuerstifte 15 in eine zweite Schaltstellung gebracht werden können, in der sie schräg nach innen auf das Transportband 13 hin geneigt sind, oder in eine erste Stellung, in der sie im Wesentlichen steil nach oben gerichtet sind. Diese Steuerstifte 15 sind so positioniert, dass sie jeweils auf den Steuerflächen 25 (siehe Figur 2) der Klinkenträger 21 zur Anlage kommen. Durch das Verschwenken der Steuerstifte 15 von der zweiten in die erste Schaltstellung können folglich die Klinkenträger 21 von der Verriegelungsstellung in die Entriegelungsstellung gedrückt werden, wobei dies durch die gemeinsame Lagerung der Steuerstifte 15 an einer Schwenkachse A synchron für alle Klinkenträger 21 in einer Reihe erfolgt.

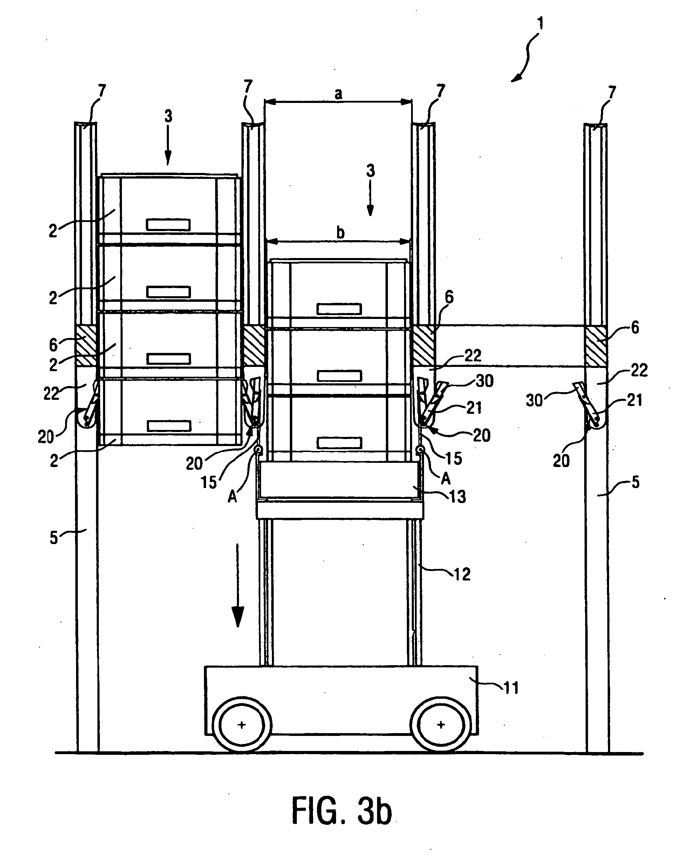

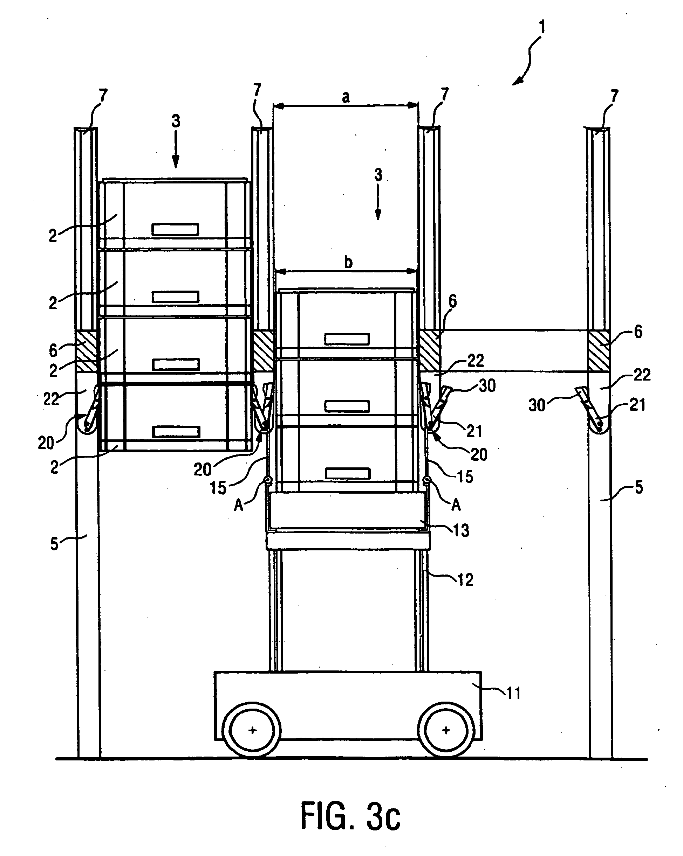

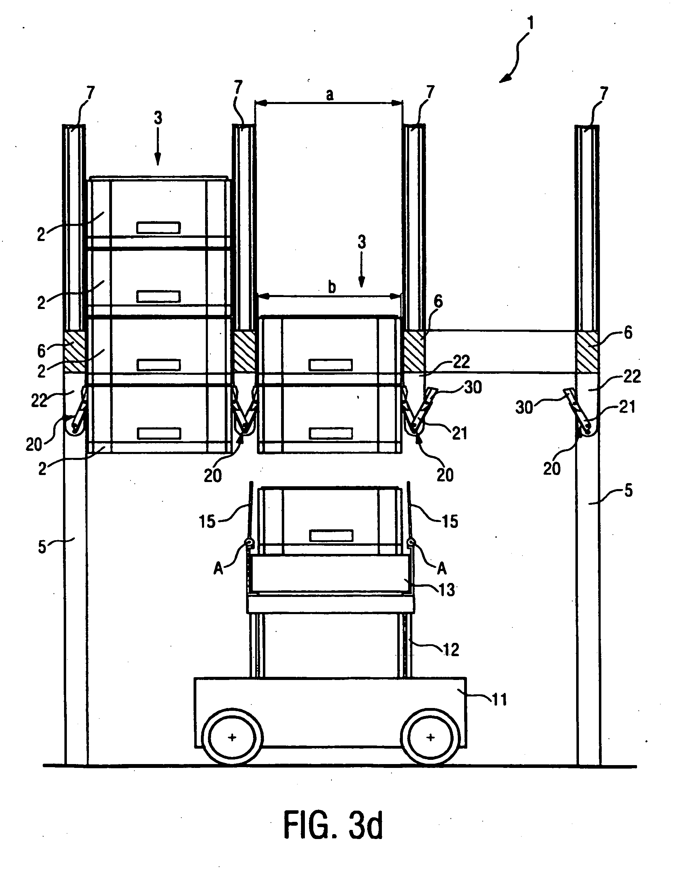

Wie in den Figuren 3a und 3b dargestellt, fährt die Hubvorrichtung 12 mit den Steuerstiften 15 in der ersten Schaltstellung nach oben, so dass das Transportband 13 unter der untersten Kiste 2 aufliegt und vorzugsweise der Kistenstapel 3 geringfügig angehoben wird, um die Klinkenmechanismen 20 zu entlasten. Durch die Steuerstifte 15 werden dann die Klinkenträger 21 in der betreffenden Reihe in die Entriegelungsstellung gebracht, so dass die untere Kiste 2 freigegeben wird. Anschließend wird die Hubvorrichtung 12 wieder nach unten gefahren (siehe Figur 3 c), wobei die Steuerstifte 15 entlang der Steuerflächen 25 der Klinkenträger 21 nach unten gleiten, so dass schließlich, wenn die untersten Kisten 2 der Reihe den Klinkenmechanismus 20 passiert haben, die Klinkenträger 21 wieder in die Verriegelungsstellung kippen und die Klinkenköpfe 32 der Klinken 30 an den Seitenwänden 2W der zweituntersten Kiste 2 zur Anlage kommen. Wird die Hubvorrichtung 12 noch weiter heruntergefahren, rasten schließlich die Klinken 30 unter dem Kragen 2K am Boden der zweituntersten Kiste 2 ein und die unterste Kiste 2 kann vollständig mit der Hubvorrichtung 12 nach unten gefahren werden (Figur 3d). Die Kistenstapel 3 werden nun jeweils an der ehemals zweituntersten Kiste 2 im Gestell 4 sicher gehalten.

Sobald die Hubvorrichtung 12 in der untersten Stellung ist, können die Kisten 2 mittels des Transportbands 12 zu einer Aufgabe-/Entnahmestation 8 der Beschickungsvorrichtung 10 transportiert werden. Diese Aufgabe-/Entnahmestation 8 erstreckt sich unter dem Gestell 4 quer vor einer Stirnseite entlang des Transportwagens 11 und weist ein entlang der gesamten Breite des Kistenstapellagers 1 verlaufendes Transportband 14 auf, über welches die Kisten 2 dann aus dem Lager 1 herausgeführt werden.

Die Einlagerung erfolgt auf umgekehrte Weise. Über das Transportband 14 der Aufgabe-/Entnahmestation 8 werden die einzelnen einzulagernden Kisten 2 herantransportiert und mittels einer Weiche 9 an der passenden Stelle auf das Transportband 13 des Transportwagens 11 verbracht. Der Transportwagen 11 kann dann an die gewünschte Position, d. h. unter die Reihe, verfahren werden, in welcher die Kisten 2 eingelagert werden sollen (sofern sich der Transportwagen nicht bereits an der passenden Reihe befindet). Der weitere Einlagerungsmechanismus ist vergrößert in den Figuren 4a bis 4c dargestellt, wobei hier gezeigt wird, wie die erste Kiste 2 innerhalb eines Kistenstapels eingelagert wird. Zunächst wird die Kiste 2 an der passenden Stelle nach oben geschoben (Figur 4a). Durch die Kiste 2 selbst oder durch die in die passende Position gestellten ausgerichteten Steuerstifte 15 werden die Klinkenträger 21 nach außen gedrückt und die Kiste 2 so weit zwischen den Klinkenmechanismen 20 nach oben geschoben (Figur 4b), bis der Kragen 2K am Boden der Kiste 2, welcher bei der Einlagerung oben an der Kiste 2 liegt, sich oberhalb der Klinkenköpfe 32 befindet. Sofern sich die Steuerstifte 15 in der zweiten Schaltstellung (relativ eng an der Kiste 2 anliegend) befinden, klappen die Klinkenträger 21 automatisch in die Verriegelungsstellung, so dass die einzelnen Klinken 30 unterhalb des Kragens 2K der Kiste K einrasten und die Kiste 2 sicher halten (siehe Figur 4 c).

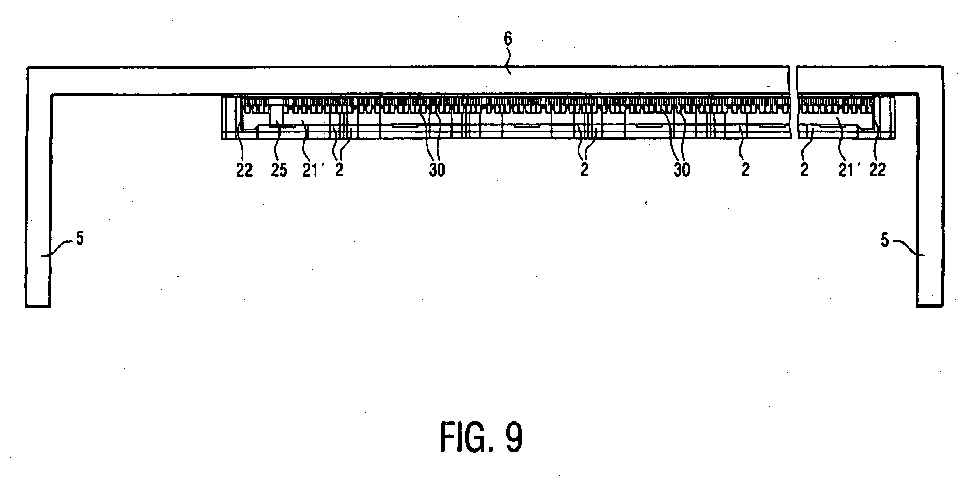

Figur 9 zeigt eine weitere Variante eines Klinkenträgers 21'. Dieser Klinkenträger 21' erstreckt sich im Wesentlichen über die gesamte Länge einer Reihe, so dass sämtliche Klinken 30 in dieser Reihe an nur einem Klinkenträger 21' befestigt sind. Bei Verwendung eines solchen Klinkenträgers 21' ist es nicht nötig, am Transportwagen 11 bzw. an der Hubvorrichtung 12 für jeden Kistenstapel eigene Steuerstifte 15 vorzusehen, sondern es reicht aus, wenn z. B. ein Steuerstift oder ein ähnliches Steuerelement beispielsweise am vorderen und/oder am hinteren Ende einer Kistenstapelreihe am Klinkenträger 21' angreift, um synchronisiert sämtliche Klinken 30 innerhalb der Reihe zu entriegeln. Dadurch ist es insbesondere auch möglich, über die gesamte Reihenlänge die einzelnen Klinken 30 frei zu verteilen, so dass sogar ohne Beachtung von Sortierregeln Kisten beliebiger Größe hintereinander in der Reihe eingelagert werden können.

Abschließend wird noch einmal darauf hingewiesen, dass es sich bei den in den Figuren und der Beschreibung dargestellten Systemen und Verfahren lediglich um Ausführungsbeispiele handelt, die vom Fachmann in einem weiten Umfang variiert werden können, ohne den Rahmen der Erfindung zu verlassen. Es wird außerdem der Vollständigkeit halber darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Kistenstapellager (1), in welchem Kisten (2) übereinander gestapelt gelagert werden, mit an einem Gestell (4) beweglich gelagerten Halteklinken (30), die zum Halten der untersten Kiste (2) eines Kistenstapels (3) in einem Abstand über dem Boden (B) an zwei gegenüberliegenden Seiten an der Kiste (2) angreifen,
**dadurch gekennzeichnet,**
**dass** jeder dieser Kistenseiten mindestens vier Halteklinken (30) zugeordnet sind, welche einzeln quer zu einer Kistenwand (2W) der betreffenden Kistenseite beweglich gelagert sind und welche zur Entnahme einer durch die Halteklinken (30) gehaltenen Kiste (2) aus dem Kistenstapellager (1) synchronisiert ansteuerbar sind

2. Kistenstapellager nach Anspruch 1, **dadurch gekennzeichnet, dass** jeder dieser Kistenseiten mindestens fünf, besonders bevorzugt mindestens sechs, Halteklinken (30) zugeordnet sind.

3. Kistenstapellager nach Anspruch 1 oder 2, **dadurch gekennzeichnet, dass** die Halteklinken (30) jeweils gruppenweise in voneinander beabstandeten Bereichen entlang der Kistenseite angeordnet sind.

4. Kistenstapellager nach einem der Ansprüche 1 bis 3, **dadurch gekennzeichnet, dass** jeder dieser Kistenseiten eine sich zumindest über einen Bereich entlang der Kistenseite erstreckende Reihe von unmittelbar oder in einem kurzen Abstand zueinander benachbarten Halteklinken (30) zugeordnet ist.

5. Kistenstapellager (1), insbesondere nach einem der Ansprüche 1 bis 4, in welchem Kisten (2) übereinander gestapelt gelagert werden, mit an einem Gestell beweglich gelagerten Halteklinken (30), die zum Halten der untersten Kiste (2) eines Kistenstapels (3) in einem Abstand über dem Boden (B) an zwei gegenüberliegenden Kistenseiten an der Kiste (2) angreifen,
**dadurch gekennzeichnet,**
**dass** die Halteklinken (30) zumindest über einen bestimmten Bereich entlang einer Kistenwand (2W) der betreffenden Kistenseite verschiebbar gelagert sind.

6. Kistenstapellager nach einem der Ansprüche 1 bis 5, **dadurch gekennzeichnet, dass** eine Halteklinke (30) einen Halteklinkenkopf (32) umfasst, der beim Halten einer Kiste (2) an der betreffenden Kistenseite zur Anlage kommt und sich in Richtung auf die Kistenwand (2W) hin verjüngt.

7. Kistenstapellager nach einem der Ansprüche 1 bis 6, **dadurch gekennzeichnet, dass** die einzelnen einer Kistenseite einer Kiste (2) zugeordneten Halteklinken (30) mittels eines gemeinsamen Entriegelungsmechanismus entriegelbar und/oder verriegelbar sind.

8. Kistenstapellager nach einem der Ansprüche 1 bis 7, **dadurch gekennzeichnet, dass** die einzelnen einer Kistenseite einer Kiste (2) zugeordneten Halteklinken (30) an einem Klinkenträger (21, 21') beweglich gelagert sind, welcher am Gestell (4) beweglich gelagert ist und zur Entnahme der Kiste (2) so ansteuerbar ist, dass die Halteklinken (30) entriegelt werden.

9. Kistenstapellager nach Anspruch 7 oder 8, **dadurch gekennzeichnet, dass** im Kistenstapellager (1) mehrere Kistenstapel (3) in einer Reihe hintereinander einlagerbar sind und dass Halteklinken (30), welche verschiedenen Kisten (2) in der Reihe zugeordnet sind, an einem gemeinsamen Klinkenträger (21, 21') beweglich gelagert sind und/oder mittels eines gemeinsamen Entriegelungsmechanismus entriegelbar und/oder verriegelbar sind.

10. Kistenstapellager nach Anspruch 9, **dadurch gekennzeichnet, dass** sämtliche Halteklinken (30), welche den Kisten (2) in der Reihe zugeordnet sind, an einem sich entlang der Reihe erstrecken gemeinsamen Klinkenträger (21') gelagert sind und/oder mittels eines gemeinsamen Entriegelungsmechanismus entriegelbar und/oder verriegelbar sind.

11. Kistenstapellager nach einem der Ansprüche 1 bis 10, **dadurch gekennzeichnet, dass** die Halteklinken (30) und/oder Klinkenträger (21, 21') jeweils in Form von Fallklinken ausgebildet sind, die um eine horizontale, parallel zur Längserstreckung der Kistenseitenwand (2W) verlaufende Schwenkachse (S₁, S₂) gegen die jeweilige Kistenseite verschwenkbar am Gestell (4) gelagert sind.

12. Kistenstapellager nach einem der Ansprüche 1 bis 11, **dadurch gekennzeichnet, dass** die Halteklinken (30) jeweils um eine horizontale, parallel zur Längserstreckung der Kistenseitenwand (2W) verlaufende Schwenkachse (S₂) gegen die jeweilige Kistenseite verschwenkbar am Klinkenträger (21, 21') gelagert sind.

13. Kistenstapellager nach einem der Ansprüche 1 bis 12, **dadurch gekennzeichnet, dass** die Halteklinken (30) vorzugsweise derart am Gestell (4) des Kistenstapellagers (1) angeordnet sind und jeweils an ihrer Oberseite zumindest über einen sich längs zur Kistenseitenwand (2W) erstreckenden Abschnitt quer zur Kistenseitenwand (2W) eine derartige Dicke (d) aufweisen, dass ein Abstand (c) zwischen der von der Kiste (2) wegweisenden Oberkante der Halteklinke (30) zu einer benachbarten Kante des Gestells (4) kleiner ist als die Breite (k) einer Oberkante einer,einzulagernden Kiste (2).

14. Kistenstapellager nach einem der Ansprüche 1 bis 13, **dadurch gekennzeichnet, dass** die Halteklinken (30) und/oder Klinkenträger (21, 21') federnd gelagert sind, so dass sie durch eine Federkraft in eine Verriegelungsstellung gebracht werden.

15. Kistenstapellager nach einem der Ansprüche 1 bis 14, **gekennzeichnet durch** eine unter den eingelagerten Kisten angeordnete Transportvorrichtung (11) mit einer Hubvorrichtung (12), welche im Betrieb einzulagernde Kisten (2) von unten in den Kistenstapel (3) verbringt und auszulagernde Kisten (2) unter dem jeweiligen Kistenstapel (3) abholt.

16. Kistenstapellager nach Anspruch 15, **dadurch gekennzeichnet, dass** die Transportvorrichtung (11) ein Schaltelement (15) umfasst, welches zum Auslagern einer Kiste (2) so auf die der betreffenden Kiste (2) zugeordneten Halteklinken (30) und/oder die zugehörigen Klinkenträger (21) einwirkt, dass die Halteklinken (30) entriegelt werden.

17. Kistenstapellager nach Anspruch 15 oder 16, **dadurch gekennzeichnet, dass** das Schaltelement (15) an der Hubvorrichtung (12) angeordnet ist und zwischen einer ersten Schaltstellung zur Entriegelung der Halteklinken (30) in einem angehobenen Zustand der Hubvorrichtung (12) und einer zweiten Schaltstellung, in welcher die Halteklinken (30) in einem angehobenen Zustand der Hubvorrichtung (12) nicht entriegelt sind, hin- und herschaltbar ist.

18. Kistenstapellager nach einem der Ansprüche 1 bis 17, **dadurch gekennzeichnet, dass** das Kistenstapellager (1) mehrere nebeneinander angeordnete Reihen zur Lagerung von Kistenstapeln (3) aufweist und die Transportvorrichtung (11) einen sich längst der Reihen erstreckenden Transportwagen (11) umfasst, welcher quer zu den Reihen verfahrbar ist.

## Claims

1. Crate store (1) for storing crates (2) in a stacked manner, comprising a frame (4) with moveably mounted holding grips (30), which, to hold the lowest crate (2) of a crate stack (3) at a distance above the floor (B), grip the crate (2) on two opposite sides,
**characterized in that**
each of those crate sides is allocated at least four moveably mounted holding grips (30), which holding grips (30) are moveably mounted transverse to a crate sidewall (2W) on that side, and which holding grips (30) are synchronously actuated to remove a crate (2), held by the holding grips (30), from the crate store (1).

2. Crate store (1) according to claim 1, **characterized in that** each of those crate sides are allocated at least five, particularly preferably at least six, holding grips (30).

3. Crate store (1) according to any of claims 1 to 2, **characterized in that** the holding grips (30) are arranged in separate groups along a crate side.

4. Crate store (1) according to any of claims 1 to 3, **characterized in that** each of those crate sides is allocated a series, distributed over at least one region along the crate side, of holding grips (30) located directly beside each other or separated from each other by a short distance.

5. Crate store (1), in particular according to any of claims 1 to 4, for storing crates (2) in a stacked manner, comprising a frame (4) with moveably mounted holding grips (30), which, to hold the lowest crate (2) of a crate stack (3) at a distance above the floor (B), grip the crate (2) on two opposite sides,
**characterized in that**
the holding grips (30) are mounted to laterally slide at least over a certain region alongside a crate sidewall (2W) on that side of the crate (2).

6. Crate store (1) according to any of claims 1 to 5, **characterized in that** a holding grip (30) comprises a holding grip head (32), which rests against the side of a crate (2) when holding the crate (2), and which is tapered towards the crate sidewall (2W).

7. Crate store (1) according to any of claims 1 to 6, **characterized in that** the individual holding grips (30) allocated to a side of crate (2) can be latched and/or unlatched by a shared latching mechanism.

8. Crate store (1) according to any of claims 1 to 7, **characterized in that** the individual holding grips (30) allocated to a side of crate (2) are moveably mounted on a grip bearer (21, 21'), which grip bearer (21, 21') is moveably mounted on the frame (4) and can be actuated to unlatch the holding grips (30) to remove the crate (2).

9. Crate store (1) according to claim 7 or 8, **characterized in that** several crate stacks (3) are stored in a row in the crate store (1), and **in that** holding grips (30) allocated to different crates (2) in the row are moveably mounted on a shared grip bearer (21, 21') and/or can be latched and/or unlatched by a shared latching mechanism.

10. Crate store (1) according to claim 9, **characterized in that** all holding grips (30) allocated to the crates (2) in a row are mounted on a shared grip holder (21') arranged alongside the row, and/or can be latched and/or unlatched by a shared latching mechanism.

11. Crate store (1) according to any of claims 1 to 10, **characterized in that** the holding grips (30) and/or grip holders (21, 21') are realised as pawls, mounted on the frame (4) on a horizontal swivel axis (S₁, S₂) longitudinally parallel to the length of the crate sidewall (2W) to swivel towards that side of the crate (2).

12. Crate store (1) according to any of claims 1 to 11, **characterized in that** the holding grips (30) are each mounted on a grip holder (21, 21') about a horizontal swivel axis (S₂) longitudinally parallel to the length of the crate sidewall (2W) to swivel towards that side of the crate (2).

13. Crate store (1) according to any of claims 1 to 12, **characterized in that** the holding grips (30) are preferably mounted on the frame (4) of the crate store (1) and their top surfaces, at least along a section along the crate sidewall (2W) and transverse to the crate sidewall (2W), comprise a thickness (d) such that a separation (c) from the upper edge of the holding grip (30) furthest from the crate (2) to a neighbouring edge of the frame (4) is less than the width (k) of the top edge of a crate (2) to be stored.

14. Crate store (1) according to any of claims 1 to 13, **characterized in that** the holding grip (30) and/or grip holders (21, 21') are spring-mounted so that a spring load acts to bring them into a latched position.

15. Crate store (1) according to any of claims 1 to 14, **characterized by** a transport arrangement (11), arranged under the stored crates (2), with a lifting apparatus (12), which, during operation, inserts crates (2) for storage into the crate stack (3) from below, and releases crates (2) for removal from underneath the crate stack (3).

16. Crate store (1) according to claim 15, **characterized in that** the transport arrangement (11) comprises a switch element (15), which, in order to remove a crate (2), acts upon the holding grips (30) and/or the grip holders (21) allocated to that crate (2) such that the holding grips (30) are unlatched.

17. Crate store (1) according to claim 15 or 16, **characterized in that** the switch element (15) is arranged upon the lifting apparatus (12) and can be switched back and forth between a first switch position to unlatch the holding grips (30) in a raised state of the lifting apparatus (12) and a second switch position in which the holding grips (30) are not latched in a raised state of the lifting apparatus (12).

18. Crate store (1) according to any of claims 1 to 17, **characterized in that** the crate store(1) comprises a plurality of adjacent rows for storing crate stacks (3), and the transport arrangement (11) comprises a transport vehicle (11) arranged along the length of a row and moveable transverse to the rows.

## Revendications

1. Magasin de piles de caisses (1), dans lequel des caisses (2) sont stockées en étant empilées les unes au-dessus des autres, comportant des loquets de retenue (30) montés mobiles sur un châssis (4) qui, pour retenir la caisse la plus basse (2) d'une pile de caisses (3), s'engagent sur la caisse (2) sur deux côtés opposés, à une distance au-dessus du sol (B),
**caractérisé en ce que**
à chacun de ces côtés de caisse sont associés au moins quatre loquets de retenue (30) qui sont montés individuellement mobiles transversalement à une paroi de caisse (2W) du côté de caisse concerné et qui, pour retirer depuis le magasin de piles de caisses (1) une caisse (2) retenue par les loquets de caisse (30), peuvent être pilotés de manière synchronisée.

2. Magasin de piles de caisses selon la revendication 1, **caractérisé en ce qu'**à chacun de ces côtés de caisse sont associés cinq loquets de retenue (30), de manière particulièrement préférée au moins six.

3. Magasin de piles de caisses selon la revendication 1 ou 2, **caractérisé en ce que** les loquets de retenue (30) sont chacun agencés en groupes dans des zones espacées les unes des autres le long du côté de caisse.

4. Magasin de piles de caisses selon l'une des revendications 1 à 3, **caractérisé en ce qu'**à chacun de ces côtés de caisse est associée une rangée, s'étendant au moins sur une zone le long du côté de caisse, de loquets de retenue (30) voisins directement les uns des autres ou à faible distance les uns des autres.

5. Magasin de piles de caisses (1), en particulier selon l'une des revendications 1 à 4, dans lequel des caisses (2) sont stockées en étant empilées les unes au-dessus des autres, comportant des loquets de retenue (30) montés mobiles sur un châssis qui, pour retenir la caisse la plus basse (2) d'une pile de caisses (3), s'engagent sur la caisse (2) sur deux côtés opposés, à une distance au-dessus du sol (B),
**caractérisé en ce que**
les loquets de retenue (30) sont montés avec capacité de translation au moins sur une zone déterminée le long d'une paroi de caisses (2W) du côté de caisse concerné.

6. Magasin de piles de caisses selon l'une des revendications 1 à 5, **caractérisé en ce qu'**un loquet de retenue (30) comprend une tête de loquet de retenue (32) qui, lorsqu'une caisse (2) est retenue, vient en appui sur le côté de caisse concerné et se rétrécit en direction de la paroi de caisse (2W).

7. Magasin de piles de caisses selon l'une des revendications 1 à 6, **caractérisé en ce que** les loquets de retenue (30) individuels associés à un côté d'une caisse (2) peuvent être déverrouillés et/ou verrouillés au moyen d'un mécanisme de déverrouillage commun.

8. Magasin de piles de caisses selon l'une des revendications 1 à 7, **caractérisé en ce que** les loquets (30) individuels associés à un côté de caisse d'une caisse (2) sont montés mobiles sur un support de loquet (21, 21') qui est monté mobile sur le châssis (4) et peuvent être pilotés pour retirer la caisse (2) de telle sorte que les loquets de retenue (30) sont déverrouillés.

9. Magasin de piles de caisses selon la revendication 7 ou 8, **caractérisé en ce que** dans le magasin de piles de caisses (1) plusieurs piles de caisses (3) peuvent être stockées les unes derrière les autres dans une rangée, et **en ce que** des loquets de retenue (30), qui sont associés à différentes caisses (2) dans la rangée, sont montés de mobiles sur un support de loquets (21, 21') commun et/ou peuvent être déverrouillés et/ou verrouillés au moyen d'un mécanisme de déverrouillage commun.

10. Magasin de piles de caisses selon la revendication 9, **caractérisé en ce que** tous les loquets de retenue (30) qui sont associés aux caisses (2) dans la rangée, sont montés sur un support de loquets (21') commun s'étendant le long de la rangée et/ou peuvent être déverrouillés et/ou verrouillés au moyen d'un mécanisme de déverrouillage commun.

11. Magasin de piles de caisses selon l'une des revendications 1 à 10, **caractérisé en ce que** les loquets de retenue (30) et/ou les supports de loquets (21, 21') sont chacun réalisés sous forme de loqueteaux qui sont montés de manière pivotante sur le châssis (4) contre le côté de caisse respectif autour d'un axe de pivotement (S₁, S₂) horizontal s'étendant parallèlement à l'extension longitudinale de la paroi latérale de caisse (2W).

12. Magasin de piles de caisses selon l'une des revendications 1 à 11, **caractérisé en ce que** les loquets de retenue (30) sont chacun montés de manière pivotante sur le support de loquets (21, 21') contre le côté de caisse respectif autour d'un axe de pivotement (S₂) horizontal s'étendant parallèlement à l'extension longitudinale de la paroi latérale de caisse (2W).

13. Magasin de piles de caisses selon l'une des revendications 1 à 12, **caractérisé en ce que** les loquets de retenue (30) sont agencés de préférence de telle sorte sur le châssis (4) du magasin de piles de caisses (1) et présentent chacun, transversalement à la paroi de côté de caisse (2W), sur leur face supérieure respective, au moins sur un tronçon s'étendant le long de la paroi de côté de caisse (2W), une telle épaisseur (d) qu'un espacement (c) entre l'arête supérieure du loquet de retenue (30), détournée de la caisse (2), et une arête voisine du châssis (4) est plus petit que la largeur (k) d'une arête supérieure d'une caisse (2) à stocker.

14. Magasin de piles de caisses selon l'une des revendications 1 à 13, **caractérisé en ce que** les loquets de retenue (30) et/ou les supports de loquets (21, 21') sont montés de manière élastique, de telle sorte qu'ils peuvent être amenés par force de ressort dans une position de verrouillage.

15. Magasin de piles de caisses selon l'une des revendications 1 à 14, **caractérisé par** un dispositif de transport (11) agencé au-dessous des caisses stockées, comportant un dispositif de levage (12) qui, au fonctionnement, transfère des caisses à stocker (2) depuis le bas dans la pile de caisses (3) et retire des caisses à évacuer au-dessous de la pile de caisses (3) respective.

16. Magasin de piles de caisses selon la revendication 15, **caractérisé en ce que** le dispositif de transport (11) comprend un élément de commutation (15) qui, pour évacuer une caisse (2), agit de telle sorte sur les loquets de retenue (30) associés à la caisse (2) concernée et/ou sur les supports de loquets (21) associés que les loquets de retenue (30) sont déverrouillés.

17. Magasin de piles de caisses selon la revendication 15 ou 16, **caractérisé en ce que** l'élément de commutation (15) est agencé sur le dispositif de levage (12) et qu'une commutation en va-et-vient a lieu entre une première position de commutation pour déverrouiller les loquets de retenue (30) dans un état soulevé du dispositif de levage (12) et une deuxième position de commutation dans laquelle les loquets de retenue (30) ne sont pas déverrouillés dans un état soulevé du dispositif de levage (12).

18. Magasin de piles de caisses selon l'une des revendications 1 à 17, **caractérisé en ce que** le magasin de piles de caisses (1) présente plusieurs rangées agencées les unes à côté des autres pour stocker des piles de caisses (3), et le dispositif de transport (11) comprend un chariot (11) s'étendant le long des rangées, lequel peut être déplacé transversalement aux rangées.
